# EUROPÄISCHE PATENTSCHRIFT

(11) **EP 2 065 687 B1**
(45) Veröffentlichungstag und Bekanntmachung des Hinweises auf die Patenterteilung: **08.01.2014**
(21) Anmeldenummer: 08020772.3
(22) Anmeldetag: 28.11.2008
(51) Int. Cl.: G01G 19/00

(54) **Vorrichtung für den Transport und das Wiegen von Briefen**
Device for transporting and weighing letters
Dispositif pour le transport et la pesée de lettres

(30) Priorität: 28.11.2007 DE 202007016722 U
(43) Veröffentlichungstag der Anmeldung: 03.06.2009
(73) Patentinhaber: WIPOTEC Wiege-und Positioniersysteme GmbH, 67657 Kaiserslautern (DE)
(72) Erfinder: Rothfuchs, Michael, 66885 Bedesbach (DE); Berg, Nora, 67663 Kaiserslautern (DE)
(74) Vertreter: Mischung, Ralf

(56) Entgegenhaltungen:
- EP-A- 1 362 644
- DE-A1- 19 604 090
- DE-T2- 69 915 699
- US-A- 3 861 480
- US-A1- 2002 166 704

## Beschreibung

Die vorliegende Erfindung betrifft eine Vorrichtung für den Transport und das Wiegen von Gegenständen, welche die Vorrichtung aufeinanderfolgend passieren.

Derartige Vorrichtungen sind insbesondere aus der Briefverarbeitung bekannt. In Briefverteilzentren werden die Briefe nacheinander und in schneller Folge einer Waage zuführt, um dort deren Gewicht zu ermitteln. Die Briefe werden dabei üblicherweise hochkant bzw. aufrechtstehend transportiert und einer auf einer Wägezelle angeordneten Transporteinheit zugeführt. Das Gewicht dieser Transporteinheit ist mit dem Lastaufnehmer einer Wägezelle gekoppelt, so dass das Gewicht des in der Transporteinheit befindlichen Briefes erfasst und verarbeitet werden kann.

Zweckmäßigerweise erfolgt das Wiegen in schneller Folge, so dass die Briefe mit hoher Geschwindigkeit bewegt werden, wodurch die für wägetechnische Zwecke zur Verfügung stehende Verweildauer in der Transporteinheit für die Erfassung des Gewichts gering wird. Die Masse und die Form des Briefes hat jedoch nachteilige Auswirkungen auf den Einschwingvorgang des Messsignals der Wägezelle. So können auf den von der Transporteinheit ergriffenen Brief Umlenkbewegungen oder Luftströmungen einwirken, die ungewollt das Messsignal beeinflussen. Auch die Art und Größe bzw. die Masse der auf der Wägezelle aufsitzenden Transporteinheit kann das Wägeergebnis verfälschen. Eine große und damit träge Masse verlangsamt den Einschwingvorgang des Messsignals. Eine Unwucht in dem bewegten Teil führt ebenfalls zu Messfehlern. Eine große Oberfläche führt zu erhöhter Windempfindlichkeit.

In der DE 196 05 015 C1 ist eine Vorrichtung zum Bedrucken eines auf einer Kante stehenden Druckträgers beschrieben. Über Andruckelemente wird der Druckträger dabei gegen eine Führungsplatte gedrückt, so dass er während des Transports und Druckvorgangs kraftschlüssig erfasst ist. Die Vorrichtung ist nicht zum Wiegen geeignet und die Führungsplatte ist relativ groß ausgebildet.

Aus der EP 1 362 644 ist eine Wiegevorrichtung für Poststücke bekannt, bei der eine Transportvorrichtung zur Beförderung von Poststücken die Vorlast für eine Waage bildet. Zur Ermittlung des Gewichts des Poststücks werden dabei mehrere Gewichtsmessungen für jedes Poststück vorgenommen, während es die Vorrichtung passiert, um anschließend das exakte Gewicht rechnerisch zu ermitteln.

Die DE 196 040 90 A1 beschreibt eine Vorrichtung zur automatischen Gewichtsbestimmung von Poststücken. Die Poststücke werden dabei einzelnen Wägesystemen zugeführt und werden gewogen, während sie gefasst und transportiert werden. Dabei sind die Zuführsysteme mechanisch von den Wiegesystemen entkoppelt, um eine genaue Gewichtsbestimmung zu ermöglichen. Die Poststücke werden während des Transports permanent gefasst. Darüber hinausgehende Lösungen zur seitlichen Stabilisierung der Poststücke werden in dieser Schrift nicht thematisiert.

Aufgabe der Erfindung ist es, eine Vorrichtung zum Transport von Gegenständen anzubieten, die das Wiegen der Gegenstände in schneller Folge erlaubt und Messfehler dabei bestmöglichst ausschließt.

Die Aufgabe wird gelöst durch eine Vorrichtung nach Anspruch 1.

Der Erfindung liegt die Überlegung zu Grunde, dass ungewollte Bewegungen, Vibrationen oder Auslenkungen des geförderten Briefes mit Hilfe von Führungselementen reduziert werden können, was insbesondere in dem Moment hilfreich ist, wenn der Brief von der auf der Wägezelle sitzenden Transporteinheit erfasst und bewegt wird. Mit Hilfe der erfindungsgemäßen Führungselemente wird eine seitliche Stabilisierung des Briefes erreicht, so dass dieser seine im Wesentlichen zweidimensionale Form beibehält und insbesondere ein Flattern oder (schwerkraftbedingtes) Umbiegen des Briefes in seiner vertikalen Ausrichtung während des Transports vermieden wird. Diese Stabilisierung soll erfindungsgemäß dann erfolgen, wenn der Brief teilweise oder ganz von der auf der Wägezelle aufsitzenden Transporteinheit erfasst wird, um gewogen zu werden.

Eine erste Ausführungsform der Erfindung sieht dabei eine Vorrichtung für den Transport und das Wiegen von die Vorrichtung aufeinanderfolgend passierenden Gegenständen vor, wobei es sich bei den Gegenständen insbesondere um Briefe handeln kann. Diese erstrecken sich dabei vorzugsweise in eine erste Richtung X und eine dazu senkrechte zweite Richtung Z und werden mit einer in Förderrichtung vorausgerichteten Vorderkante und einer der Förderrichtung abgewandten Hinterkante gefördert.

Die Vorrichtung umfasst eine Transporteinheit, welche von einer unmittelbar vorgeschalteten Zufuhreinrichtung mit Briefen beliefert werden kann. Die Transporteinheit ist als Vorlast mit dem Lastaufnehmer einer Wägezelle gekoppelt, um vor oder während der Weiterförderung (also bei kontinuierlichem Transport oder auch im Start/Stop-Betrieb) das Gewicht der Briefe mittels der Wägezelle zu erfassen. Die Transporteinheit ist dabei zur Aufnahme der Briefe beginnend mit ihrer Vorderkante ausgebildet.

Die Transporteinheit weist dabei wenigstens zwei gegenüberliegende Transportelemente auf, die für einen dazwischen angeordneten Brief einen Spalt bilden und ihn dabei beidseitig berühren, um ihn zwischen sich hindurchzutransportieren. Wenigstens eines dieser - vorzugsweise rollen- oder bandförmigen - Transportelemente ist dabei antreibbar, um den Transport des Gegenstands bzw. Briefes zu bewirken. Unter "Transportelement" im Sinne dieser Erfindung ist dabei insbesondere ein Element der Transporteinheit zu verstehen, welches den Gegenstand unmittelbar mit einer Kraft in Transportrichtung beaufschlagt. Auch derjenige Abschnitt kann "Transportelement" sein, der den Gegenstand im Bereich des Spaltes in Y-Richtung stützt, aber nicht angetrieben ist.

Die räumlichen Abmessungen der den Spalt bildenden Transportelemente in ihrer Anordnung an der Transporteinheit umschreiben dabei in X, Y und Z-Richtung einen Raum (R), der möglichst klein gewählt wird, indem die Transportelemente klein gehalten werden. Dies geschieht, um die mit der Wägezelle gekoppelten bewegten Massen gering zu halten und Schwingungs- bzw. Unwuchteinflüsse aus diesen Massen auf das Wägeergebnis zu reduzieren oder zu vermeiden. Daher werden die Walzen oder Transportbänder, zwischen denen der Brief hindurchgefördert wird, in ihrer axialen Richtung (Z) und wenn möglich auch in ihrem Durchmesser möglichst kurz ausgebildet. Dies führt dazu, dass der Brief beim Transport mittels der Transporteinheit nur innerhalb dieses "Raumes" gegriffen bzw. gehalten wird, wobei sich der gesamte Brief jedoch mit seinen Abmessungen in X- und Z-Richtung über diesen Raum hinaus nach außen erstrecken kann.

Erfindungsgemäß ist außerhalb des Raumes (R) wenigstens ein Führungselement vorgesehen, welches den Brief in einer zu den Richtungen X und Z senkrechten Richtung Y mit einer Führungskraft beaufschlagt, um in diesem Bereich ein seitliches Auslenken oder Flattern des Briefes zu vermeiden, wenn die Transporteinheit den Gegenstand an seiner Vorderseite aufgegriffen oder eingezogen hat. Auch eine schräg zu X, Y und Z verlaufende Kraft soll hier als Führungskraft verstanden werden, solange sie eine Komponente in Y-Richtung umfasst.

Das wenigstens eine Führungselement kann zum Beispiel oberhalb des vorbeschriebenen Raumes (R) angeordnet sein, um den Brief insbesondere im Bereich seiner Oberkante zu stabilisieren. Sofern die Transportelemente den Brief mit ausreichendem Abstand von seiner Unterkante einziehen bzw. transportieren, kann auch die Anordnung eines oder mehrerer Führungselemente unterhalb der Transportelemente sinnvoll sein, um den Brief insbesondere im Bereich seiner Unterkante zu beruhigen bzw. um Schwingungen zu dämpfen oder zu verhindern.

Eine besonders vorteilhafte Ausführungsform sieht weiterhin vor, in Förderrichtung unmittelbar stromaufwärts der Transporteinheit bzw. des von seinen Transportelementen umschriebenen Raumes wenigstens ein Führungselement anzuordnen, um dort, im Bereich der Hinterkante des Briefes, eine seitliche Stabilisierung bzw. Beruhigung zu erreichen, wenn der Brief von der Transporteinheit erfasst und eingezogen wird. Schließlich ist die Anordnung von Führungselementen auch im Bereich stromabwärts des vorgenannten Raumes sinnvoll, wenn der Brief beim Verlassen der Transporteinheit im Bereich seiner Vorderkante beruhigt werden soll.

Mit Hilfe der erfindungsgemäßen Führungselemente soll der Brief also so gut wie möglich in der X-Z-Ebene gehalten werden. Insbesondere sollen Bewegungen oder Auslenkungen einzelner Briefbereiche in Y-Richtung (also etwa an der Vorder-, Ober-, Unter- oder Hinterkante) wirksam unterbunden werden. Dann kann der Brief "beruhigt" von der Transporteinheit aufgenommen und transportiert bzw. von der Wägezelle gewogen werden, ohne dass störende Schwingungen oder Vibrationen auf den Einschwingvorgang und das Messergebnis Einfluss nehmen.

Wird der Brief beispielsweise durch zwei aneinanderliegende Rollen der Transporteinheit eingezogen, so kann das freie rückwärtige Briefende durch die Führungselemente genau fluchtend ausgerichtet werden, um seitliche Vibrationskräfte beim weiteren Einzug des Briefs bis zu seiner Hinterkante zu unterbinden. Alternativ oder ergänzend können erfindungsgemäße Führungselemente auch oberhalb oder unterhalb der Transporteinheit angeordnet sein, um den Brief im Bereich seiner Ober- bzw. Unterkante seitlich zu stabilisieren. Dieser Vorteil kommt erfindungsgemäß insbesondere dann zum Tragen, wenn die Transporteinheit im Verhältnis zu dem zu transportierenden Brief relativ flach und klein bzw. gewichtsarm ausgebildet ist.

Ein über die Transporteinheit oben oder unten hinausragender Brief, der auf Grund seiner Abmessungen zum Umfallen, Durchbiegen oder Flattern neigt, wird durch die erfindungsgemäßen Führungselemente ebenso seitlich stabilisiert wie die nach vorne oder hinten aus der Transporteinheit herausragenden freien Enden des Briefes, wenn dort geeignete Führungselemente angeordnet sind. Im Wesentlichen behält der Brief also seine zweidimensionale Form bei und Vibrationen oder Relativbewegungen in Y-Richtung - je nach Ausführung und Größe der Führungselemente - entlang des gesamten Briefes können vermieden werden.

Nach einer vorteilhaften Ausführungsform der Erfindung ist das wenigstens eine Führungselement getrennt von der Transporteinheit bzw. der Wägezelle ausgebildet. Die getrennte Ausführung reduziert die Vorlast und bietet konstruktive Freiheiten zur Gestaltung und Anordnung der Führungselemente abseits der Wägezelle.

Alternativ oder ergänzend können die Führungselemente auch mit der Wägezelle bzw. der damit gekoppelten Transporteinheit verbunden sein. Dies kommt insbesondere dann in Frage, wenn die Führungselemente den Brief stabilisieren während er gewogen wird. Die Führungselemente sind dann vorzugsweise oberhalb oder unterhalb der Transportelemente angeordnet sind, da der Brief typischerweise gewogen wird, während er die Transporteinheit passiert. In diesem Fall ist Kraftnebenschluss zu vermeiden, so dass auch die Führungselemente zweckmäßigerweise einen Teil der Vorlast der Wägezelle bilden. Auch stromaufwärts oder stromabwärts der Transportelemente angeordnete Führungselementen sind als Teil der Vorlast denkbar.

Vorteilhafterweise ist das wenigstens eine Führungselement nach einer weiteren Ausführungsform der Erfindung mit einem nachgiebigen bzw. elastischen, den Brief in Y-Richtung beaufschlagenden Kontaktmittel versehen. Dabei kann es sich insbesondere um eine Art Bürste handeln, deren Borsten nachgiebig ausgebildet sind und die Stabilisierungsfunktion weitgehend unabhängig von der Dicke des Briefes übernimmt. Ohne Wechsel bzw. Anpassung der Führungselemente können so unterschiedlich dicke Briefe transportiert, gewogen und dabei gleichzeitig stabilisiert bzw. beruhigt werden. Auch andere elastische Kontaktmittel (Beläge, gefederte Fläche etc.) kommen in Frage.

Zur Ableitung von elektrostatischer Ladung an den Briefen ist nach einer vorteilhaften Ausführungsform der Erfindung das wenigstens eine Führungselement antistatisch, leitfähig bzw. ableitfähig ausgebildet. Etwaige Aufladungen des Briefes können so abgeführt werden, bevor oder spätestens während der Brief von der Transporteinheit vollständig aufgegriffen oder eingezogen wird, um Fehlmessungen zu vermeiden, welche durch solche elektrostatische Ladungen verursacht werden könnten.

Die erfindungsgemäßen Führungselemente können in unterschiedlicher Weise angeordnet sein. So ist deren Anordnung auf nur einer Seite des Briefes denkbar, um diesen nur einseitig zu beaufschlagen. Alternativ oder ergänzend können weitere Führungselemente vorgesehen sein, die auf unterschiedlichen Seiten des Briefes angeordnet sind. Sie können dabei relativ zur X-Z-Ebene unmittelbar gegenüberliegend und/oder in X-Richtung und/oder Z-Richtung versetzt zueinander angeordnet sein, wenn die konstruktive Ausbildung dies erfordert oder erleichtert. So sind in Förderrichtung oder in vertikaler Richtung versetzt zueinander angeordnete Führungselemente ebenso denkbar wie zwei unmittelbar gegenüberliegende Elemente, die einen Spalt für den Brief bilden und ihn dort in positive und negative Y-Richtung stabilisieren bzw. "beruhigen".

Ein erfindungsgemäßes Verfahren hätte für eine der vorbeschriebenen Vorrichtungen den Schritt zum Inhalt, wonach der Gegenstand außerhalb des Raumes (R) durch wenigstens ein Führungselement in einer zu den Richtungen X und Z senkrechten Richtung Y mit einer Führungskraft beaufschlagt und geführt bzw. beruhigt wird, um ein seitliches Auslenken oder Flattern des Gegenstands, insbesondere im Bereich seiner Kanten (O, V, H, U) zu vermeiden, wenn die Transporteinheit den Gegenstand an seiner Vorderkante aufgegriffen oder eingezogen hat

Weitere vorteilhafte Ausführungsformen ergeben sich aus den Unteransprüchen.

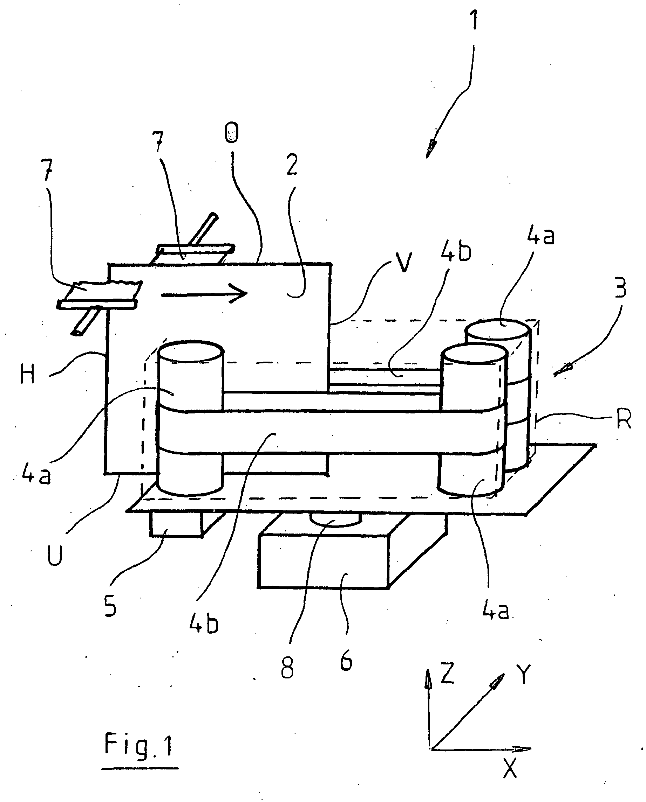

Nachfolgend soll eine Ausführungsform der Erfindung anhand eines Figurenbeispiels näher erläutert werden. Die einzige Figur 1 zeigt dabei eine Vorrichtung 1 für die Förderung und das Wiegen von Briefen 2. Auf dem Lastaufnehmer 8 einer Wägezelle 6 ist dabei eine Transporteinheit 3 angeordnet. Sie umfasst vier Transportwalzen 4a, welche sich im Wesentlichen vertikal nach oben in Z-Richtung erstrecken und paarweise von einem als Transportband ausgebildeten weiteren Transportelement 4b umlaufen werden. Zwischen den Walzen 4a bzw. Transportbändern 4b wird vorzugsweise ein Spalt ausgebildet, der einen darin eingeführten Brief 2 in vorgebbarem Maß einklemmt, so dass dieser durch Rotation der Walzen 4a in X-Richtung gefördert werden kann. Die Transporteinheit 3 wird durch einen Motor 5 angetrieben.

Die Ausdehnungen der Transportelemente 4a, 4b in X-, Y- und Z-Richtung umschreiben einen gestrichelt angedeuteten Raum R, der den Bereich umfasst, in dem der Brief beidseitig beaufschlagt und zum Transport angetrieben wird.

Stromaufwärts und oberhalb des Raumes R sind zwei Führungselemente 7 angeordnet, um den Brief 2 im Bereich seiner Oberkante O bzw. Hinterkante H seitlich, also in Y-Richtung, zu stabilisieren. Erfindungsgemäß soll die Stabilisierungswirkung insbesondere dann bestehen, wenn der Brief 2 mit seiner Vorderkante V bereits in die Transporteinheit 3 eingezogen bzw. von dieser aufgegriffen wurde.

Zur besonders schonenden und flexiblen Stabilisierung bzw. "Beruhigung" des Briefes 2 sind die Führungselemente 7 mit einem bürstenartigen Kontaktmittel versehen. Dieses passt sich an die Dicke des Briefes 2 flexibel an, ohne dass der Abstand der Führungselemente 7 zum Brief 2 jeweils angepasst werden muss. Zu erkennen ist weiterhin, dass die Führungselemente 7 in X-Richtung versetzt zueinander gegenüberliegend angeordnet sind. Ein solcher Versatz kann alternativ oder ergänzend auch in Z-Richtung gewählt werden. Zusätzliche oder ausschließlich unmittelbar gegenüberliegend angeordnete Führungselemente 7 sind ebenfalls denkbar.

Wenn der Brief 2 in mit einem Pfeil dargestellte X-Richtung von der Transporteinheit 3 eingezogen wird, so geschieht dies mit der Vorderkante V voraus. Während der Brief 2 innerhalb des Raumes R bzw. im Bereich der gegenüberliegenden Transportwalzen 4a eine gewisse seitliche Stabilisierung erfährt, fehlt es zunächst an einer solchen Stabilisierung stromaufwärts, also vor der Transporteinheit 3 und auch oberhalb der Transportwalzen 4a. Im Bereich der Hinterkante H könnte der Brief 2 z. B. seitlich vibrieren, wobei sich diese Vibration über die Transporteinheit 3 auch auf die Wägezelle 6 übertragen könnte und unerwünschten Einfluss auf das Wägeergebnis nähme. Auch im Bereich der Oberkante O des Briefes 2 könnte dieser seitlich ausweichen oder auf Grund von Luftströmungen oder Eigengewicht in Y-Richtung ausgelenkt werden. Auch solche Relativbewegungen wirken auf die hochempfindliche Wägezelle 6 ein.

Um die vorgenannten Einflüsse zu vermeiden, sind daher die Führungselemente 7 vorgesehen, die speziell dann zur zusätzlichen seitlichen Stabilisierung des Briefes, vorzugsweise im Bereich der Oberkante O bzw. der Hinterkante H vorgesehen sind, wenn der Brief von der Transporteinheit teilweise oder vollständig aufgenommen bzw. eingezogen wurde.

## Patentansprüche

1. Vorrichtung (1) für den Transport und das Wiegen von die Vorrichtung aufeinanderfolgend passierenden Gegenständen (2), insbesondere Briefen, wobei sich die Gegenstände (2) in eine erste Richtung X und eine dazu senkrechte zweite Richtung Z erstrecken und - von einer Zufuhreinrichtung kommend - mit einer in Förderrichtung voraus gewandten Vorderkante (V), einer nach oben gewandten Oberkante (O), einer nach unten gewandten Unterkante (U) und einer der Förderrichtung abgewandten Hinterkante (H) an eine unmittelbar nachfolgende Transporteinheit (3) gefördert werden,
a) wobei die Transporteinheit (3) als Vorlast mit einer Wägezelle (6) gekoppelt ist, um vor oder während der Weiterförderung das Gewicht der Gegenstände mittels der Wägezelle (6) zu erfassen, und
b) wobei die Transporteinheit (3) wenigstens zwei gegenüberliegende Transportelemente (4a, 4b) aufweist, die einen Spalt bilden, um den Gegenstand (2) dazwischen hindurchzufördem, und von denen wenigstens ein - vorzugsweise rollen- oder bandförmiges - Transportelement (4a, 4b) antreibbar ist,
c) wobei die räumlichen Abmessungen der den Spalt bildenden Transportelemente (4a, 4b) der Transporteinheit (3) in X, Y und Z-Richtung einen Raum (R) umschreiben, und
d) wobei die Transporteinheit (3) zur Aufnahme des Gegenstands (2) mit seiner Vorderkante (V) beginnend ausgebildet ist, um ihn weiter zu fördern,
**dadurch gekennzeichnet, dass**
e) außerhalb des Raumes (R) wenigstens ein Führungselement (7) vorgesehen ist, welches den Gegenstand (2) in einer zu den Richtungen X und Z senkrechten Richtung Y mit einer Führungskraft beaufschlagt, um ein seitliches Auslenken oder Flattern des Gegenstands (2), insbesondere im Bereich seiner Kanten (O, V, H, U) zu vermeiden, wenn die Transporteinheit (3) den Gegenstand (2) an seiner Vorderkante (V) aufgegriffen oder eingezogen hat, und
f) das wenigstens eine Führungselement (7) nicht zugleich Transportelement ist.

2. Vorrichtung nach Anspruch 1, **dadurch gekennzeichnet, dass** das wenigstens eine Führungselement (7) als Teil der Vorlast der Wägezelle (6) oder getrennt davon ausgebildet ist.

3. Vorrichtung nach Anspruch 1 oder 2, **dadurch gekennzeichnet, dass** das wenigstens eine Führungselement (7) ein elastisches, den Gegenstand (2) in Y-Richtung beaufschlagendes Kontaktmittel, insbesondere nach Art einer Bürste, aufweist.

4. Vorrichtung nach einem der vorhergehenden Ansprüche, **dadurch gekennzeichnet, dass** das Führungselement (7) und/oder das Kontaktmiltel antistatisch, leitfähig oder ableitfähig ausgebildet ist, um elektrostatische Ladung vom Gegenstand (2) abzuführen.

5. Vorrichtung nach einem der vorigen Ansprüche, **dadurch gekennzeichnet, dass** mehrere Führungselemente (7)
a) auf der gleichen Seite des Gegenstands (2) angeordnet sind, um diesen einseitig zu beaufschiagen, oder
b) auf unterschiedlichen Seiten des Gegenstands (2) angeordnet sind, um diesen beidseitig zu beaufschlagen, wobei die Führungselemente (7) dabei relativ zur X-Z-Ebene gegenüberliegend und/oder in X- und/oder Z-Richtung versetzt zueinander angeordnet sind.

6. Vorrichtung (1) nach einem der vorigen Ansprüche, **dadurch gekennzeichnet, dass** die gegenüberliegenden und den Gegenstand zwischen sich aufnehmenden Transportelemente (4a, 4b) gleichartig und/oder symmetrisch zu einer dazwischen liegenden X-Z-Ebene ausgebildet sind.

7. Vorrichtung (1) nach einem der vorigen Ansprüche, **dadurch gekennzeichnet, dass** die Vorrichtung (1) zum Wiegen der Gegenstände (2) ausgebildet ist, während sich diese bewegen.

8. Vorrichtung (1) nach einem der vorigen Ansprüche, **dadurch gekennzeichnet, dass** der Raum (R) in vertikaler Z-Richtung kürzer ist als die Höhe des Gegenstands in Z-Richtung.

## Claims

1. A device (1) for the transportation and weighing of objects (2), in particular letters, successively passing through the device, wherein the objects (2) extend in a first direction X and a second direction Z perpendicular thereto and - coming from a supply device - with a front edge (V) facing forwards in the conveying direction, an upper edge (O) facing upwards, a lower edge (U) facing downwards, and a rear edge (H) facing away from the conveying direction are conveyed to a directly following transport unit (3),
a) wherein the transport unit (3) as a preload is coupled to a weighing cell (6) in order to detect the weight of the objects by means of the weighing cell (6) before or during the further conveyance, and
b) wherein the transport unit (3) has at least two opposing transport elements (4a, 4b), which form a gap in order to convey the object (2) through between them and of which at least one - preferably roller-type or band-type - transport element (4a, 4b) can be driven,
c) wherein the spatial dimensions of the transport elements (4a, 4b) of the transport unit (3) that form the gap circumscribe a space (R) in the X-, Y- and Z-direction, and
d) wherein the transport unit (3) is formed to receive the object (2) starting with its front edge (V) in order to convey it further,
**characterised in that**
e) provided outside the space (R) there is at least one guide element (7) which acts upon the object (2) with a guiding force in a direction Y that is perpendicular to the directions X and Z in order to avoid a lateral deflection or fluttering of the object (2), in particular in the region of its edges (0, V, H, U), when the transport unit (3) has seized or drawn in the object (2) at its front edge (V), and
f) the at least one guide element (7) does not simultaneously constitute the transport element.

2. A device according to claim 1, **characterised in that** the at least one guide element (7) is formed as part of the preload of the weighing cell (6) or separately therefrom.

3. A device according to claim 1 or 2, **characterised in that** the at least one guide element (7) has an elastic contact means, in particular along the lines of a brush, that acts upon the object (2) in the Y-direction.

4. A device according to one of the preceding claims, **characterised in that** the guide element (7) and/or the contact means is/are formed so as to be antistatic, conductive or capable of discharge in order to dissipate electrostatic charge away from the object (2).

5. A device according to one of the previous claims, **characterised in that** a plurality of guide elements (7)
a) are arranged on the same side of the object (2) in order to act upon it on one side, or
b) are arranged on different sides of the object (2) in order to act upon it on both sides, wherein the guide elements (7) are then arranged so as to lie opposite each other relative to the X-Z plane and/or so as to be offset with respect to each other in the X-.and/or Z-direction.

6. A device (1) according to one of the previous claims, **characterised in that** the transport elements (4a, 4b) that lie opposite each other and receive the object between them are formed so as to be similar and/or symmetrical to an X-Z-plane lying in between.

7. A device (1) according to one of the previous claims, **characterised in that** the device (1) is formed to weigh the objects (2) whilst they are moving.

8. A device (1) according to one of the previous claims, **characterised in that** the space (R) in the vertical Z-direction is shorter than the height of the object in the Z-direction.

## Revendications

1. Dispositif (1) pour le transport et la pesée d'objets (2) passant successivement sur le dispositif, en particulier des lettres, les objets (2) s'étendant dans une première direction X et dans une deuxième direction Z perpendiculaire à celle-ci et, en provenance d'un dispositif d'alimentation, présentant un bord avant (V) orienté dans la direction de convoyage vers l'avant, un bord supérieur (O) orienté vers le haut, un bord inférieur (U) orienté vers le bas et un bord arrière (H) orienté dans la direction opposée à la direction de convoyage, convoyés vers une unité de transport (3) disposée immédiatement après,
a) l'unité de transport (3) étant couplée en tant que précharge, à une cellule de pesée (6) afin de mesurer, avant et pendant le convoyage ultérieur, le poids des objets au moyen de la cellule de pesée (6) et
b) l'unité de transport (3) comprenant au moins deux éléments de transport (4a, 4b) opposés, qui forment un interstice afin de convoyer l'objet (2) entre les deux et dont au moins un élément de transport (4a, 4b), de préférence sous la forme d'un rouleau ou d'une bande, peut être entraîné,
c) les dimensions spatiales des éléments de transport (4a, 4b) de l'unité de transport (3) formant l'interstice décrivant un espace (R) dans les directions X, Y et Z et
d) l'unité de transport (3) étant conçue pour saisir l'objet (2) en commençant par son bord avant (V) afin de le convoyer plus loin
**caractérisé en ce que**
e) à l'extérieur de l'espace (R) est prévu au moins un élément de guidage (7) qui exerce sur l'objet (2) une force de guidage dans une direction Y perpendiculaire aux directions X et Z, afin d'éviter une déviation ou un flottement latéral de l'objet (2), en particulier au niveau de ses bords (O, V, H, U) lorsque l'unité de transport (3) a saisi ou pris l'objet (2) par son bord avant (V), et
f) l'au moins un élément de guidage (7) n'est pas simultanément un élément de transport.

2. Dispositif selon la revendication 1, **caractérisé en ce que** l'au moins un élément de guidage (7) est conçu comme une partie de la précharge de la cellule de pesée (6) ou en est séparé.

3. Dispositif selon la revendication 1 ou 2, **caractérisé en ce que** l'au moins un élément de guidage (7) comprend un moyen de contact élastique, en particulier sous la forme d'un balai, qui guide l'objet (2) dans la direction Y.

4. Dispositif selon l'une quelconque des revendications précédentes, **caractérisé en ce que** l'élément de guidage (7) et/ou le moyen de contact est conçu de manière à être antistatique, conducteur ou dissipateur afin de dissiper la charge électrostatique de l'objet (2).

5. Dispositif selon l'une quelconque des revendications précédentes, **caractérisé en ce que** plusieurs éléments de guidage (7)
a) sont disposés du même côté de l'objet (2) afin de le guider d'un seul côté, ou
b) sont disposés sur des côtés différents de l'objet (2) afm de le guider des deux côtés, les éléments de guidage (7) étant opposés par rapport au plan X-Z et/ou disposés de manière décalée les uns par rapport aux autres dans la direction X et/ou Z.

6. Dispositif (1) selon l'une quelconque des revendications précédentes, **caractérisé en ce que** les éléments de transport (4a, 4b) opposés et logeant l'objet entre eux sont conçus de la même manière et/ou sont symétriques par rapport à un plan X-Z disposé entre eux.

7. Dispositif (1) selon l'une quelconque des revendications précédentes, **caractérisé en ce que** le dispositif (1) est conçu pour peser les objets (2) pendant que ceux-ci se déplacent.

8. Dispositif (1) selon l'une quelconque des revendications précédentes, **caractérisé en ce que** l'espace (R) est plus court dans la direction Z verticale que la hauteur de l'objet dans la direction Z.
